# EUROPEAN PATENT SPECIFICATION

(11) **EP 2 077 715 B1**
(45) Date of publication and mention of the grant of the patent: **14.12.2011**
(21) Application number: 07834589.9
(22) Date of filing: 29.10.2007
(51) Int. Cl.: A01K 63/02, A23B 4/16, A23L 1/333, B65D 81/20, B65D 85/50, B65B 25/06

(54) **PACKAGING AND METHOD FOR STORING OF LIVING CRUSTACEANS AND SHELLFISH**
VERPACKUNG UND LAGERUNGSVERFAHREN FÜR LEBENDE SCHALEN- UND KRUSTENTIERE
EMBALLAGE ET PROCÉDÉ POUR STOCKER DES CRUSTACÉS ET DES COQUILLAGES VIVANTS

(30) Priority: 30.10.2006 NL 1032763
(43) Date of publication of application: 15.07.2009
(73) Proprietor: Seafarm B.V., 4493 ML Kamperland (NL)
(72) Inventor: BOUT, Adriaan, 4486 CJ Colijnsplaat (NL)
(74) Representative: van Kooij, Adriaan
(86) International application number: PCT/NL2007/000273
(87) International publication number: WO 2008/054198

(56) References cited:
- EP-A- 0 720 954
- EP-A- 1 065 144
- EP-A- 1 679 004
- FR-A- 2 883 263
- NL-C- 1 013 691
- US-A- 5 722 345
- US-A1- 2006 127 541

## Description

The present invention relates to a packaging and a method for holding and storing living crustaceans and/or shellfish. More specifically the present invention relates to a packaging and a method for holding and storing living crustaceans and/or shellfish in a leakage-proof and gastight packaging under a protective and preserving gas atmosphere.

In some cases crustaceans and/or shellfish such as oysters, mussels, mantles, razor clams, clams and/or cockles, are packed while alive and stored for consumption.

The shelf-life of such packaged crustaceans and/or shellfish is however limited. This is caused by the fact that, isolated from their natural environment, the crustaceans and/or shellfish die after a (short) period of for instance a few days after packaging, and thereby become unsuitable for consumption.

A number of methods for prolonging the shelf-life of living crustaceans and/or shellfish are known from.the prior art.

EP 0 880 899 and EP 1 063 177 thus describe a method for prolonging the shelf-life of living crustaceans and/or shellfish by packaging and storing thereof under a protective gas atmosphere of 25% to 50% oxygen (O₂), optionally supplemented with carbon dioxide (CO₂).

In most cases this method comprises of creating a vacuum in the sealed package and subsequently introducing therein a gas atmosphere of the desired composition.

EP 0 720 954 further describes a method for prolonging the shelf-life of living crustaceans and/or shellfish by packing thereof with shell halves optionally closed using pressure means.

US 2006/0127541 describes a method of packaging live seafood comprises the steps providing a sealable container placing the live seafood in the container and replacing the atmospheric gas in the container with a gas mixture comprising CO₂ and O₂ content of at least 50% and a CO₂ content of at least 20%.

EP 1 065 144 describes a method for packaging mussels and similar shellfish, comprising the introduction of an amount of living shellfish into a leak proof container, the supply of a protective gas atmosphere to the container, and the leak proof sealing of the container, wherein, moreover, a minor amount of a preservative is introduced into the container, and wherein a protective gas atmosphere is used, which delays the formation of waste products in the shellfish.

Although the prior art methods prolong the shelf-life of living crustaceans and/or shellfish, there continues to be a need in the field for a further extension of shelf-life.

The present invention therefore has for its object to prolong the shelf-life of crustaceans and/or shellfish packed while alive. This objective is achieved according to the present invention by a packaging and method as defined in the appended claims.

In a first embodiment the present invention relates to a packaging embodied for containing living crustaceans and/or shellfish, comprising a gastight and leakage-proof sealed container wherein the gas atmosphere in the container comprises at least more than 90% O₂ (v/v).

The present inventors have discovered, surprisingly, that packaging of the crustaceans and/or shellfish in this way results in an extension of the shelf-life of one or more days compared to for instance a gas atmosphere with 50% O₂ (v/v) .

This extension of the shelf-life is not only important for commercial reasons but also for the safety of the consumer. This is because the consumption of crustaceans and/or shellfish which are tainted or have already died represents a great public health risk.

In a preferred embodiment of the present invention the gas atmosphere in the container is 100% O₂ (v/v).

The present inventors have found a positive relation between the oxygen concentration and the shelf-life of living crustaceans and/or shellfish.

In addition, they have found that a higher oxygen concentration, such as for instance more than 90% O₂ (v/v) and preferably 100% (v/v), creates a buffer capacity of oxygen so that during storage the oxygen concentration remains sufficiently high to provide the preservative effect.

Such a buffer capacity, or compensation, is desirable because, during the storage of living crustaceans and/or shellfish for a period of a number of days, the oxygen concentration in the package falls due to for instance the oxygen consumption by the packaged crustaceans and/or shellfish themselves.

If insufficient buffer capacity is available, the oxygen concentration will fall below the effective oxygen concentration providing the prolonged shelf-life.

In a particularly recommended embodiment of the present invention the gas atmosphere in the container consists substantially of a mixture of O₂ and CO₂ formed by 90-100% O₂ (v/v) and 0-10% CO₂ (v/v), optionally supplemented to 100% with residual gases of metabolic origin.

The advantage of the additionally available carbon dioxide is the retention of a good odour of the packaged crustaceans and/or shellfish.

The residual gases in this embodiment, such as nitrogen and hydrogen, are the result of the metabolic processes occurring in the still living crustaceans and/or shellfish.

Although in most cases the gas atmosphere in the container will consist immediately after packaging of a mixture of 90-100% O₂ (v/v) and 0-10% CO₂ (v/v), owing to the metabolism of the living crustaceans and/or shellfish other gases will also be generated after a period of time, such as a few days, which will mix in the gastight container with the preservative atmosphere already present.

In a further preferred embodiment the present invention relates to a packaging wherein the gastight and leakage-proof container comprises a bottom surface and one or more side surfaces extending from the bottom surface.

The bottom surface and the one or more side surfaces define a leakage-proof compartment for enclosing the crustaceans and/or shellfish and the gas atmosphere. In addition, the container is sealed in gastight and leakage-proof manner by a sealing element.

It is recommended in this embodiment that the container is a substantially rectangular or square open box (four side surfaces) or a bucket (one side surface), most preferred being a substantially rectangular or square open box (four side surfaces).

It is recommended that the container according to this embodiment is sealed by a gastight film, and in particular by a transparent gastight film. Such a film not only simplifies gastight sealing of the container, but also allows a visual inspection of the crustaceans and/or shellfish packaged in the container.

Because of the advantageous properties of an increased oxygen concentration for the shelf-life of crustaceans and/or shellfish, the present invention also relates to a method for packaging living crustaceans and/or shellfish, comprising of packaging the crustaceans and/or shellfish under a gas atmosphere of 90-100% O₂ (v/v).

The method according to the present invention preferably makes use of a gas atmosphere of 90-100% O₂ (v/v) supplemented to 100% (v/v) with CO₂. 90% O₂ (v/v) and 10% (v/v) CO₂ and 100% O₂ (v/v) and 0% (v/v) CO₂.

Because of the advantageous properties of flushing with a preservative atmosphere on the shelf-life of crustaceans and/or shellfish compared to vacuumizing of the packaging, the present invention also relates to a method for packaging living crustaceans and/or shellfish, comprising the steps of:
1. placing the crustaceans and/or shellfish in a container;
2. flushing the container with 90-100% O₂ (v/v) ; and
3. sealing the container in gastight and leakage-proof manner.

As already stated above, the crustaceans and/or shellfish are in most cases first vacuumized in the prior art, after which the desired gas mixture is introduced instead of a gas flushing with the desired gas mixture as in step (b).

This (short) exposure of the crustaceans and/or shellfish to a vacuum inevitably results in the death of at least some of the cells of the organism, which inherently has adverse effects on the shelf-life.

This method not only provides the advantageous effect of a longer shelf-life due to the flushing with a preservative gas atmosphere as in step (b), but the increased oxygen concentration also provides a further advantageous extension of the shelf-life.

In a preferred embodiment the method according to the present invention is performed with a gas mixture of 90-100% O₂ (v/v) supplemented to 100% (v/v) with CO₂ for the reasons already stated above.

The container used in the method according to the present invention is preferably a container comprising a bottom surface and one or more side surfaces extending from the bottom surface, wherein the bottom surface and the one or more side surfaces define a leakage-proof compartment for enclosing the crustaceans and/or shellfish, such as a rectangular box or bucket.

The above described container is preferably sealed in gastight and leakage-proof manner with a film, such as a transparent film.

As already stated above, the shelf-life of crustaceans and shellfish is also affected by the closure of the shell halves.

The present invention therefore also relates to a method for packaging crustaceans and/or shellfish, wherein the shell halves are substantially closed or are held closed.

The packaging and the method according to the present invention are preferably applied to crustaceans and/or shellfish chosen from the group consisting of oysters, mussels, mantles, razor clams, carpet clams, clams and cockles, most preferred being razor clams.

The present invention will be further described on the basis of the following illustrative examples. These examples are specific recommended embodiments.

### Examples

### Example 1

This example demonstrates the extended shelf-life of razor clams under a preservative gas atmosphere, and particularly a preservative gas atmosphere with an increased oxygen content.

The razor clams were harvested and immediately cooled and carried to the test location in a passenger vehicle. At the test location the shelf-life of the fresh razor clams was tested under different atmospheric conditions in a leakage-proof and gastight container flushed and then sealed gastightly with the stated gas mixtures.

The results of this test are summarized in table I below.

**Table I**

| day | 50% N₂ 50% O₂ (v/v) | 70% O₂ 30% CO₂ (v/v) | 79% N₂ 21% O₂ (v/v) | 100% N₂ (v/v) | 50% O₂ 50% CO₂ (v/v) | 50% O₂ 50% CO₂ (v/v)¹ |
|---|---|---|---|---|---|---|
| 1 | | | | | | |
| 2 | | | | | | |
| 3 | alive | alive | alive | alive | alive | almost dead |
| 4 | alive | alive | alive | dead | alive | |
| 5 | dead | alive | dead | | dead | |
| 6 | | | | | | |

### 1) Packaging vacuumized, after which the indicated atmosphere was introduced

Table I shows clearly that the shelf-life of the tested razor clams in a 70% oxygen (v/v) atmosphere was at least 1 day longer compared to a 50% oxygen (v/v) atmosphere. Table I further shows (sixth and seventh columns) the great influence of the vacuumizing on the shelf-life.

### Example 2

The test as according to example 1 was repeated under the atmospheric conditions indicated in table II.

**Table II**

| Bundles in bag with much gas, bundles of about 25/30 | | | | | |
|---|---|---|---|---|---|
| day | 100% O₂ (v/v) | 100% CO₂ (v/v) | 70% O₂ 30% CO₂ (v/v) | 50% O₂ 50% CO₂ (v/v) | 78% N₂ 20% O₂ (v/v) |
| 1 | alive | | alive | alive | alive |
| 2 | alive | alive | alive | alive | alive |
| 3 | alive | | alive | alive | alive |
| 4 | alive | | alive | alive | dead |
| 5 | alive | | alive | almost dead | |
| 6 | alive | | alive | | |
| 7 | alive | | alive | | |
| 8 | alive | | alive | | |
| 9 | alive | | | | |
| 10 | alive | | | | |
| 11 | dead | | | | |
| Separate packs of 10 | | | | | |
| day | | | | | |
| 1 | alive | alive | alive | alive | alive |
| 2 | alive | | alive | alive | alive |
| 3 | alive | | alive | alive | alive |
| 4 | alive | | alive | alive | alive |
| 5 | alive | | alive | almost dead | almost dead |
| 6 | alive | | almost dead | | |
| 7 | alive | | | | |
| 8 | alive | | | | |
| 9 | alive | | | | |
| 10 | alive | | | | |
| 11 | alive | | | | |
| 12 | dead | | | | |

Table II shows clearly that the shelf-life of the tested razor clams in a 70% oxygen (v/v) atmosphere was at least 1 day longer compared to a 50% oxygen v/v atmosphere. In addition, the shelf-life was further prolonged by at least 6-7 days at a 100% (v/v) oxygen concentration.

In addition to the shelf-life test, a measurement was performed to determine the oxygen consumption of the packaged razor clams.

A 2.5 litre bag was filled with 100% O₂ and 1 kilogram of razor clams. After two days the composition of the gas atmosphere in the bag was 92.5% O₂ and 2.6% CO₂ (v/v). After six days the composition of the gas atmosphere in the bag was 81.9% O₂ and 12.2% CO₂ (v/v). The remaining 5.9% (v/v) were metabolic waste gases and possible water vapour.

These results demonstrate that the oxygen consumption of the razor clamps had a considerable influence on the oxygen concentration (about 4.5 ml oxygen production and 3 ml carbon dioxide production per razor clam per day).

## Claims

1. Packaging embodied for containing living crustaceans and/or shellfish, comprising a gastight and leakage-proof sealed container, wherein the gas atmosphere in the container comprises at least more than 90% O₂ (v/v) and wherein the living crustaceans and/or shellfish are held and stored under said gas atmosphere.

2. Packaging as claimed in claim 1, wherein the gas atmosphere in the container comprises 100% O₂ (v/v).

3. Packaging as claimed in claim 1 or claim 2, wherein the gastight and leakage-proof container comprises a bottom surface and one or more side surfaces extending from the bottom surface, and the bottom surface and the one or more side surfaces define a leakage-proof compartment for enclosing the crustaceans and/or shellfish and the gas atmosphere, and an element for gastight and leakage-proof sealing of the container.

4. Packaging as claimed in claim 3, wherein the container is sealed by a film.

5. Packaging as claimed in any of the claims 1 to 4, wherein the crustaceans and/or shellfish are chosen from the group consisting of oysters, mussels, mantles, carpet clams, razor clams, clams and cockles, preferably razor clams.

6. Method for packaging living crustaceans and/or shellfish, comprising of packaging the crustaceans and/or shellfish under a gas atmosphere of at least more than 90% O₂ (v/v), preferably under a gas atmosphere of 100% O₂ (v/v).

7. Method as claimed in claim 6, wherein the gas atmosphere of at least more than 90% O₂ (v/v) is supplemented to 100% (v/v) with CO₂.

8. Method as claimed in claim 6 or claim 7, comprising:
a) placing the crustaceans and/or shellfish in a container;
b) flushing the container with 90 to 100% O₂ (v/v); and
c) sealing the container in gastight and leakage-proof manner.

9. Method as claimed in claim 8, wherein the container comprises a bottom surface and one or more side surfaces extending from the bottom surface, and the bottom surface and the one or more side surfaces define a leakage-proof compartment for enclosing the crustaceans and/or shellfish.

10. Method as claimed in claim 8 or claim 9, wherein the container is sealed in gastight and leakage-proof manner with a film.

11. Method as claimed in any of the claims 6 to 10, wherein the shell halves of shellfish are substantially closed.

12. Method as claimed in any of the claims 6 to 11, wherein the crustaceans and/or shellfish are chosen from the group consisting of oysters, mussels, mantles, carpet clams, razor clams, clams and cockles, preferably razor clams.

## Patentansprüche

1. Verpackung, ausgestaltet zur Aufnahme von lebenden Krustentieren und/oder Schalentieren, umfassend ein gasdichtes und auslaufsicheres verschlossenes Behältnis, wobei die Gasatmosphäre in dem Behältnis wenigstens mehr als 90 Vol.-% O₂ enthält, und wobei die lebenden Krustentiere und/oder Schalentiere unter der besagten Gasatmosphäre gehalten sind und aufbewahrt werden.

2. Verpackung gemäß Anspruch 1, wobei die Gasatmosphäre in dem Behältnis zu 100 Vol.-% O₂ enthält.

3. Verpackung gemäß Anspruch 1 oder Anspruch 2, wobei das gasdichte und auslaufsichere Behältnis eine Unterbodenfläche und eine oder mehrere von der Unterbodenfläche ausgehende Seitenflächen umfasst, und die Unterbodenfläche und die eine oder mehreren Seitenflächen eine auslaufsichere Kammer umgrenzen für das Einschließen der Krustentiere und/oder Schalentiere und der Gasatmosphäre, und das gasdichte und auslaufsichere Behältnis ein Bauteil für den gasdichten und auslaufsicheren Verschluss des Behältnisses umfasst.

4. Verpackung gemäß Anspruch 3, wobei das Behältnis mit einer Folie verschlossen ist.

5. Verpackung gemäß einem der Ansprüche 1 bis 4, wobei die Krustentiere und/oder Schalentiere ausgewählt sind aus der Gruppe umfassend Austern, Muscheln, Weichtiere, Teppichmuscheln, Scheidenmuscheln, Venusmuscheln und Herzmuscheln, vorzugsweise Schwertmuscheln.

6. Verfahren zum Verpacken von lebenden Krustentieren und/oder Schalentieren, umfassend das Verpacken der Krustentiere und/oder Schalentiere unter einer Gasatmosphäre aus wenigstens mehr als 90 Vol.-% O₂, vorzugsweise unter einer Gasatmosphäre von 100 Vol.-% O₂.

7. Verfahren gemäß Anspruch 6, wobei die Gasatmosphäre von zu zumindest mehr als 90 Vol.-% O₂ mit CO₂ zu 100 Vol.-% aufgefüllt ist.

8. Verfahren gemäß Anspruch 6 oder Anspruch 7, umfassend:
a) Einsetzen der Krustentiere und/oder Schalentiere in ein Behältnis;
b) Spülen des Behältnisses mit 90 bis 100 Vol.-% O₂; und
c) Verschließen des Behältnisses in gasdichter und auslaufsicherer Art und Weise.

9. Verfahren gemäß Anspruch 8, wobei das Behältnis eine Unterbodenfläche und eine oder mehrere von der Unterbodenfläche ausgehende Seitenflächen umfasst, und die Unterbodenfläche und die eine oder mehreren Seitenflächen eine auslaufsichere Kammer umgrenzen für das Einschließen der Krustentiere und/oder Schalentiere.

10. Verfahren nach Anspruch 8 oder Anspruch 9, wobei das Behältnis in gasdichter und auslaufsicherer Art und Weise mit einer Folie verschlossen ist.

11. Verfahren nach einem der Ansprüche 6 bis 10, wobei die Schalenhälften von Schalentieren im Wesentlichen geschlossen sind.

12. Verfahren nach einem der Ansprüche 6 bis 11, wobei die Krustentiere und/oder Schalentiere ausgewählt sind aus der Gruppe umfassend Austern, Muscheln, Weichtiere, Teppichmuscheln, Scheidenmuscheln, Venusmuscheln und Herzmuscheln, vorzugsweise Schwertmuscheln.

## Revendications

1. Conditionnement utilisé pour contenir des crustacés et/ou des coquillages vivants, comprenant un conteneur scellé étanche aux gaz et à l'abri des fuites, dans lequel l'atmosphère gazeuse dans le conteneur comprend au moins plus de 90 % de O₂ (v/v) et dans lequel les crustacés et/ou les coquillages vivants sont conservés et stockés dans ladite atmosphère gazeuse.

2. Conditionnement selon la revendication 1, dans lequel l'atmosphère gazeuse dans le conteneur comprend 100 % de O₂ (v/v).

3. Conditionnement selon la revendication 1 ou la revendication 2, dans lequel le conteneur étanche aux gaz et à l'abri des fuites comprend une surface de fond et une ou plusieurs surfaces latérales s'étendant de la surface de fond, et la surface de fond et la une ou plusieurs surfaces latérales définissent un compartiment à l'abri des fuites pour enserrer les crustacés et/ou les coquillages et l'atmosphère gazeuse, et un élément pour sceller le conteneur de manière étanche aux gaz et à l'abri des fuites.

4. Conditionnement selon la revendication 3, dans lequel le conteneur est scellé par un film.

5. Conditionnement selon l'une quelconque des revendications 1 à 4, dans lequel les crustacés et/ou les coquillages sont choisis dans le groupe constitué des huîtres, des moules, des manteaux, des palourdes tapis, des palourdes rasoir, des palourdes et des coques, de préférence des palourdes rasoir.

6. Procédé pour conditionner des crustacés et/ou des coquillages vivants, comprenant le conditionnement des crustacés et/ou des coquillages dans une atmosphère gazeuse d'au moins plus de 90 % de O₂ (v/v), de préférence dans une atmosphère gazeuse de 100 % de O₂ (v/v).

7. Procédé selon la revendication 6, dans lequel l'atmosphère gazeuse d'au moins plus de 90 % (v/v) est alimenté à 100 % (v/v) avec du CO₂.

8. Procédé selon la revendication 6 ou la revendication 7, comprenant les étapes consistant à:
a) placer les crustacés et/ou les coquillages dans un conteneur;
b) injecter dans le conteneur 90 à 100 % de O₂ (v/v); et
c) sceller le conteneur de manière étanche aux gaz et à l'abri des fuites.

9. Procédé selon la revendication 8, dans lequel le conteneur comprend une surface de fond et une ou plusieurs surfaces latérales s'étendant de la surface de fond, et la surface de fond et la une ou plusieurs surfaces latérales définissent un compartiment à l'abri des fuites pour enserrer les crustacés et/ou les coquillages.

10. Procédé selon la revendication 8 ou la revendication 9, dans lequel le conteneur est scellé par un film de manière étanche aux gaz et à l'abri des fuites.

11. Procédé selon l'une quelconque des revendications 6 à 10, dans lequel les demi-coques des coquillages sont sensiblement fermées.

12. Procédé selon l'une quelconque des revendications 6 à 11, dans lequel les crustacés et/ou les coquillages sont choisis dans le groupe constitué des huîtres, des moules, des manteaux, des palourdes tapis, des palourdes rasoir, des palourdes et des coques, de préférence des palourdes rasoir.
